Europäisches Patentamt

(19) European Patent Office

Office européen des brevets

(11) Numéro de publication : **0 457 666 A1**

# (12) DEMANDE DE BREVET EUROPEEN

(21) Numéro de dépôt : **91401235.6**

(22) Date de dépôt : **14.05.91**

(51) Int. Cl.⁵ : **B06B 1/04, H02K 33/00**

(30) Priorité : 18.05.90 FR 9006274

(43) Date de publication de la demande :
21.11.91 Bulletin 91/47

(84) Etats contractants désignés :
CH DE GB IT LI SE

(71) Demandeur : SOCIETE DE MECANIQUE
MAGNETIQUE S.A.
Z.I. Vernon Saint-Marcel
F-27950 Saint-Marcel (FR)

(72) Inventeur : Habermann, Helmut
63 Rue de Bizy
F-27200 Vernon (FR)
Inventeur : Jolivet, Jean-P
49 Rue de Falaise, Giverny
F-27620 Gasny (FR)

(74) Mandataire : Thévenet, Jean-Bruno et al
Cabinet BEAU DE LOMENIE 55 rue
d'Amsterdam
F-75008 Paris (FR)

(54) **Vibreur basse fréquence à grande amplitude.**

(57) Le vibreur agissant sur des vibrations de basse fréquence sur un bâti selon une direction prédéterminée X'X, comprend :

a) une première structure (210) présentant des armatures cylindriques (215, 217) coaxiales audit axe X'X et munies à leur périphérie de bobines (218, 219) et au moins un moyen de création d'un champ magnétique (213) pour faire circuler un flux magnétique entre les armatures cylindriques (215, 217),

b) une deuxième structure (220) comprenant esentiellement une masse ferromagnétique cylindrique, coaxiale à l'axe X'X et présentant des armatures cylindriques (221,222) dont la périphérie (221a, 222a) est située en regard respectivement des bobines (218, 219) et permet la circulation du flux magnétique à travers la masse ferromagnétique,

c) des paliers magnétiques actifs radiaux (223, 224) destinés à maintenir radialement sans contact la deuxième structure (220) par rapport à la première structure (210),

d) au moins un détecteur (225) de vibrations selon l'axe X'X, et un détecteur (226) de la position axiale des bobines (218, 219), et

e) des circuits d'asservissement du courant circulant dans les bobines (218, 219) en fonction des signaux délivrés par les détecteurs (225, 226) de vibrations et de position axiale.

EP 0 457 666 A1

Jouve, 18, rue Saint-Denis, 75001 PARIS

*fig.7*

La présente invention a pour objet un vibreur à basse fréquence à grande amplitude agissant sur des vibrations de basse fréquence sur un bâti selon une direction prédéterminée X'X.

Il est souvent nécessaire de réaliser un amortissement de vibrations de basse fréquence, par exemple de vibrations dont la fréquence est comprise entre quelques herz et quelques dizaines de herz, apparaissant dans des structures selon une direction prédéterminée en exerçant sur celles-ci des contraintes non négligeables. Dans certains cas, il est souhaitable de pouvoir au contraire créer des vibrations de forte amplitude et basse fréquence dans une structure selon une direction donnée, ces vibrations pouvant être utilisées dans des buts divers, par exemple de triage ou nettoyage aussi bien que de simulation ou compensation de phénomènes vibratoires.

Il existe déjà différents types de vibreurs unidirectionnels capables d'engendrer ou d'amortir des vibrations de fréquence prédéterminée. Toutefois, ces actionneurs présentent souvent un organe mobile, dont la masse est faible ou les possibilités de déplacement sont limitées, de l'ordre du millimètre par exemple, ce qui empêche de créer des efforts suffisants pour engendrer ou amortir des vibrations de basse fréquence de l'ordre de quelques herz.

On connaît ainsi des pots vibrants qui engendrent des vibrations à fréquence relativement élevée et comprennent une sortie solidaire d'une faible masse mobile montée en porte à faux et munie d'une petite bobine disposée dans l'entrefer d'un aimant permanent lui-même relié par des ressorts à un bâti. Un tel type d'actionneur à faible masse mobile n'est adapté qu'à des fréquences d'au moins plusieurs centaines de hertz et présente en outre des inconvénients dans la mesure où l'ensemble de la suspension de la masse mobile est peu rigide, ce qui rend le dispositif très sensible à des chocs latéraux.

D'une façon plus générale, les pots vibrants connus constituent des vibreurs relatifs qui créent des forces entre un stator et une sortie, au contraire des vibreurs absolus à masse libre pour lesquels ce sont les forces de réaction sur le stator ou bâti du vibreur absolu qui sont utilisées pour créer des forces utiles. Les vibreurs relatifs du type pots vibrants restent fragiles et d'utilisation délicate.

Un exemple de vibreur absolu connu à masse libre est constitué par un vibreur omnidirectionnel comprenant un corps libre sphérique monté à l'aide d'électro-aimants à l'intérieur d'un boîtier qui est ainsi capable de créer des efforts selon trois directions différentes. Un tel vibreur, qui est à haute fréquence, doit cependant présenter des entrefers réduits et supporte des déplacements qui ne dépassent pas environ un millimètre.

La présente invention vise à remédier aux inconvénients précités et à réaliser un dispositif vibreur constituant un actionneur à grande amplitude capable d'agir sur des structures selon une direction donnée dans un domaine de basses fréquences en exerçant des efforts importants sans être sensible à des chocs latéraux.

Ces buts sont atteints grâce à un vibreur basse fréquence agissant sur des vibrations de basse fréquence sur un bâti selon une direction prédéterminée X'X, caractérisé en ce qu'il comprend :

a) une première structure comprenant des première et deuxième armatures cylindriques coaxiales audit axe X'X et munies à leur périphérie respectivement d'une première et d'une deuxième bobine, et au moins un moyen de création d'un champ magnétique disposé entre lesdites première et deuxième armatures cylindriques pour faire circuler entre celles-ci un flux magnétique,

b) une deuxième structure comprenant esentiellement une masse ferromagnétique cylindrique, coaxiale audit axe X'X et présentant des troisième et quatrième armatures cylindriques dont la périphérie est située en regard respectivement desdites première et deuxième bobines et permet la circulation dudit flux magnétique à travers ladite masse ferromagnétique,

c) des premier et second paliers magnétiques actifs radiaux disposés de part et d'autre de l'ensemble constitué par lesdites première et deuxième armatures et destinés à maintenir radialement la deuxième structure par rapport à la première structure sans contact avec cette dernière,

d) au moins un détecteur de vibrations selon l'axe X'X, disposé sur l'une des première et deuxième structures,

e) un détecteur de la position axiale des bobines de la première structure par rapport auxdites troisième et quatrième armatures cylindriques correspondantes de la seconde structure, et

f) des circuits d'asservissement du courant circulant dans les bobines en fonction au moins des signaux délivrés par ledit détecteur de vibrations et des signaux délivrés par ledit détecteur de position.

Selon un premier mode de réalisation possible, la première structure est solidaire d'un bâti tandis que la deuxième structure est montée flottante par rapport à la première structure.

Selon un deuxième mode de réalisation possible, la première structure est montée flottante par rapport à la deuxième structure elle-même solidaire d'un bâti.

La première structure peut être disposée coaxialement à l'intérieur de la deuxième structure, mais un montage inverse avec une deuxième structure disposée coaxialement à l'intérieur de la première structure est également possible.

Le détecteur de vibrations ou plusieurs détecteurs de vibrations peuvent être montés sur une structure fixe solidaire du bâti.

Selon un mode particulier de réalisation, le moyen de création d'un champ magnétique comprend un aimant permanent relié aux première et deuxième armatures cylindriques par des circuits concentrateurs de flux magnétique.

Selon un autre mode particulier de réalisation, le moyen de création d'un champ magnétique est constitué au moins par un électro-aimant comprenant une bobine et une culasse reliée auxdites première et deuxième armatures cylindriques.

Les circuits d'asservissement du courant circulant dans les première et deuxième bobines peuvent être configurés de telle manière que le vibreur fonctionne en amortisseur de vibrations ou en excitateur de vibrations.

Le vibreur selon l'invention constitue un vibreur absolu robuste à masse libre asservie sans frottements, qui présente une grande linéarité et pour lequel les forces utiles sont créées à partir des forces de réaction engendrées sur la structure fixe solidaire du bâti. L'amplitude des déplacements de la masse libre selon la direction prédéterminée peut être importante sans qu'il y ait une augmentation sensible de l'énergie nécessaire, et dépend uniquement des dimensions, selon cette direction, des troisième et quatrième armatures cylindriques ou pôles de la deuxième structure par rapport à la dimension, selon cette même direction prédéterminée, des première et deuxième bobines de la première structure.

D'autres caractéristiques et avantages de l'invention ressortiront de la description suivante de modes particuliers de réalisation, donnés à titre d'exemples non limitatifs, en référence aux dessins annexés, sur lesquels :

    — la figure 1 est une vue schématique en coupe axiale d'un quart de dispositif vibreur selon un premier mode de réalisation mettant en oeuvre un aimant permanent,

    — la figure 2 est une vue analogue à celle de la figure 1, mais montre un dispositif vibreur complet selon ledit premier mode de réalisation,

    — la figure 3 montre sous forme de schéma-bloc des circuits d'asservissement associés au dispositif vibreur selon les figures 1 et 2,

    — la figure 4 est une vue de détail du mode de réalisation de la figure 1 faisant apparaître les lignes de circulation du flux magnétique,

    — la figure 5 est une vue en perspective d'un exemple d'armature cylindrique fendue munie d'un bobinage utilisable dans le dispositif vibreur selon l'invention,

    — la figure 6 est une vue en demi-coupe axiale d'un dispositif vibreur selon un deuxième mode de réalisation mettant en oeuvre un électro-aimant, et

    — la figure 7 montre sous forme de schéma-bloc des circuits d'asservissement associés au dispositif vibreur de la figure 6.

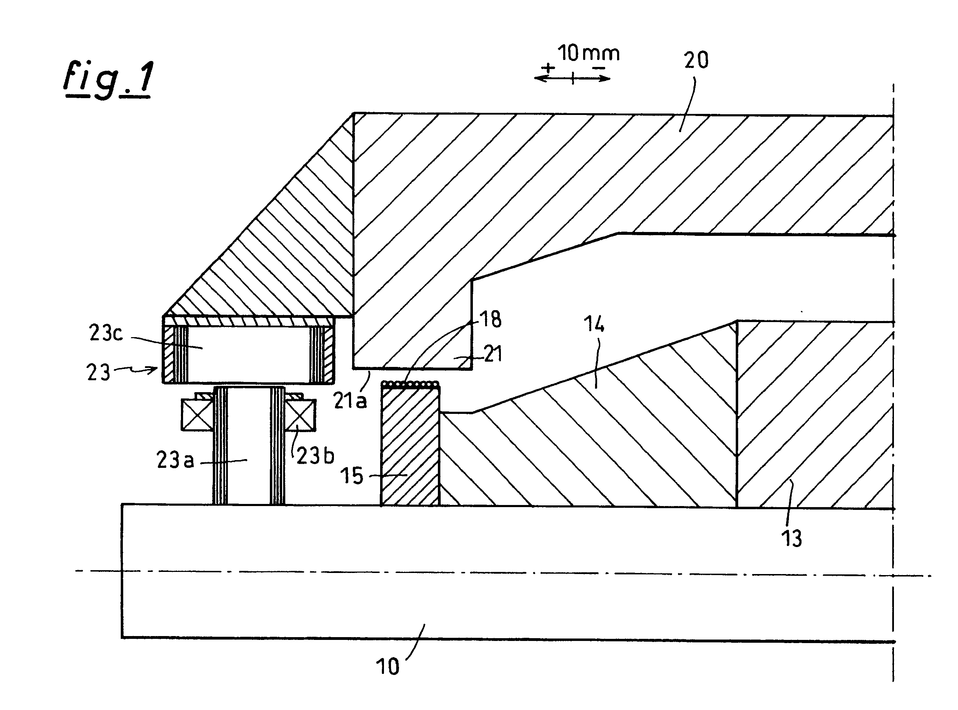

On décrira d'abord en référence aux figures 1 à 5 un premier exemple de réalisation d'un dispositif vibreur selon l'invention, conçu pour exercer une action selon un axe X'X qui peut être par exemple horizontal.

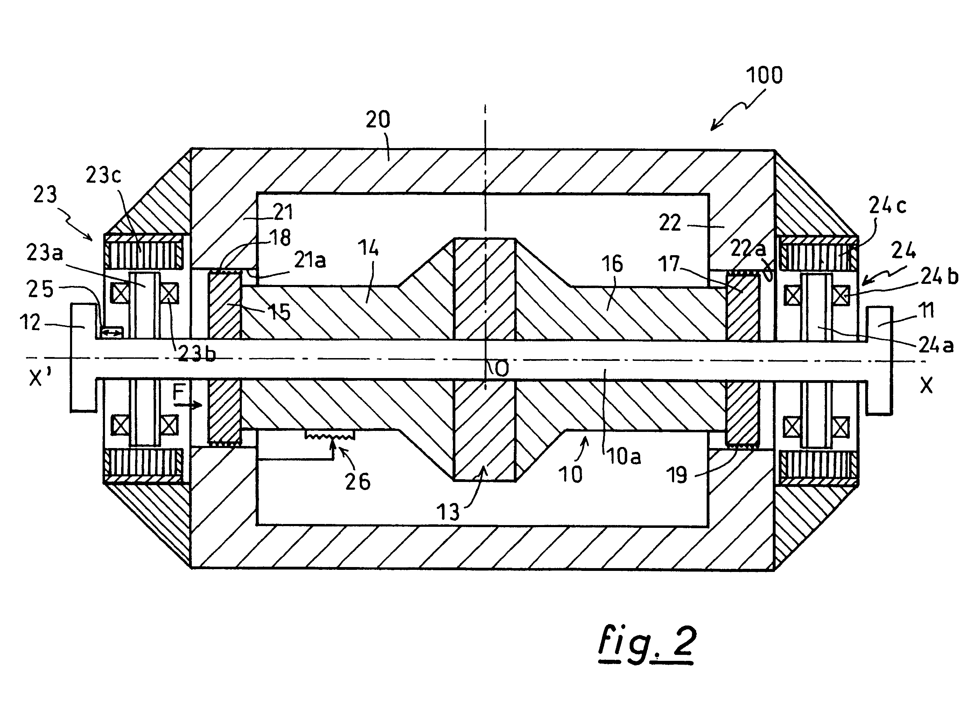

Le dispositif vibreur 100 des figures 1 et 2 comprend essentiellement une première structure centrale 10 qui comprend un arbre 10a muni à ses extrémités de brides 11, 12 permettant la fixation de la structure centrale 10 sur un bâti externe pour lequel des vibrations doivent être amorties, créées ou compensées dans la direction X'X. L'arbre 10a porte dans sa partie centrale un aimant permanent cylindrique 13, par exemple du type Samarium-cobalt, de part et d'autre duquel sont disposées des pièces de révolution 14, 16 jouant le rôle de concentrateurs de flux magnétique. Les pièces 14, 16 sont elles-mêmes en contact, par leur extrémité éloignée de l'aimant permanent 13, avec des armatures cylindriques 15, 17 coaxiales à l'axe X'X et munies chacune à leur périphérie d'une bobine 18, 19.

Une deuxième structure 20, coaxiale à la première structure 10 est montée flottante autour de cette dernière à l'aide de deux paliers magnétiques radiaux actifs 23, 24. Chacun des paliers magnétiques radiaux 23, 24 comprend une culasse de stator 23a resp. 24a montée sur l'arbre central 10a et munie de bobines d'électroaimant 23b resp. 24b, et une armature de rotor cylindrique 23c resp. 24c montée sur la structure flottante 20 de manière à ménager avec la partie périphérique cylindrique de la culasse de stator 23a resp. 24a un entrefer de par exemple quelques dixièmes de millimètre. Les paliers magnétiques radiaux 23, 24 sont asservis à partir de détecteurs radiaux qui peuvent être disposés à proximité immédiate de ces paliers 23, 24 ou dans les mêmes plans radiaux que ceux des paliers 23, 24.

La structure extérieure 20 montée flottante autour de la structure interne 10 à l'aide des paliers magnétiques radiaux 23, 24, est remarquable en ce qu'elle comprend un circuit ferromagnétique cylindrique coaxial à la structure interne 10, qui présente des armatures cylindriques 21, 22 dont la périphérie interne 21a, 22a est située en regard respectivement des bobines 18 et 19 en ménageant un entrefer avec la périphérie externe des armatures cylindriques 15, 17 faisant partie de la structure interne 10.

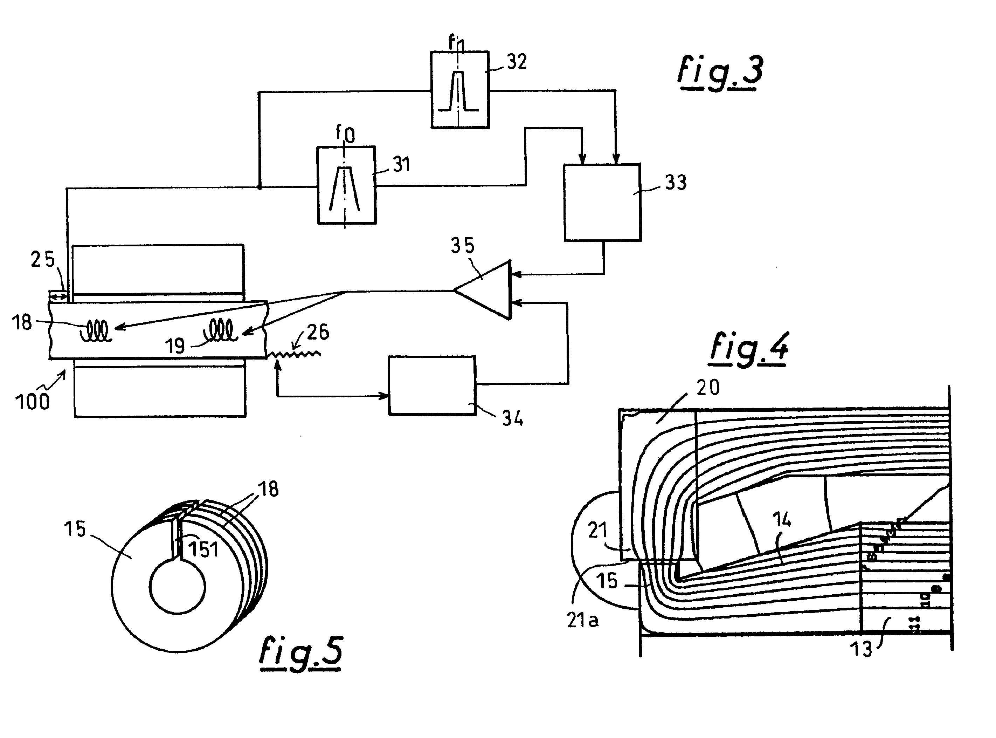

Comme on l'a représenté sur la figure 4, les lignes du flux magnétique créé par l'aimant permanent central 13 circulent à travers les concentrateurs de flux 14, 16 vers les armatures cylindriques 15, 17 munies de bobines 18, 19, puis se referment à travers le circuit ferromagnétique de la structure flottante extérieure 20 en traversant les entrefers ménagés entre les armatures 15, 21 et 17, 22.

La structure centrale 10 et la structure flottante externe 20 sont ainsi reliées entre elles sans contact d'une part à l'aide des paliers magnétiques radiaux 23, 24 qui maintiennent la structure externe 20 dans le sens radial (perpendiculairement à l'axe X'X) par rapport à la structure interne 10 et d'autre part à l'aide d'un moteur électromagnétique linéaire, constitué de l'ensemble des éléments 13 à 22, qui autorise des déplacements axiaux de relativement grande amplitude, par exemple de l'ordre de ± 10 mm de la structure extérieure 20 par rapport à la structure interne 10.

De préférence, les armatures cylindriques 15, 17 réalisées par exemple en acier présentent une fente 151 selon au moins un demi-plan axial (Fig 5) afin de limiter les courants de Foucault. Les concentrateurs de flux 14, 16 peuvent être réalisés par exemple en acier doux.

A titre d'exemple, les armatures cylindriques 15, 17 peuvent présenter chacune un diamètre D de l'ordre de 0,1 m. L'entrefer e compris entre les armatures 15, 17 de la structure 10 et les armatures 21, 22 de la structure 20 peut être compris par exemple entre 0,001 et 0,003 m.

Les première et deuxième armatures cylindriques 15, 17 de la structure 10 portant les bobines 18, 19 peuvent présenter une longueur axiale comprise entre environ 10 et 30 mm tandis que les troisième et quatrième armatures cylindriques 21, 22 de la structure 20 peuvent présenter une longueur axiale comprise entre environ 30 et 60 mm. La longueur axiale des armatures cylindriques 21, 22 excède naturellement dans tous les cas celle des armatures cylindriques 15, 17 de la possibilité maximale de déplacement axial de la structure 20 (par exemple de 20 mm si la capacité de déplacement axial du vibreur, c'est-à-dire son amplitude de vibration $\underline{a}$ est de ± 10 mm).

Un capteur de position 26 (Fig. 2) détecte les déplacements relatifs des structures 10 et 20 l'une par rapport à l'autre afin de maintenir les armatures 15, 21 et 17, 22 en regard les unes des autres. Un ou plusieurs accéléromètres 25 sont disposés sur la structure 10 ou le bâti auquel est fixée cette structure afin de commander les circuits d'asservissement du courant circulant dans les bobines 18, 19 du moteur linéaire.

Les circuits d'asservissement du courant circulant dans les bobines 18, 19 ont été représentés sous la forme de schéma-bloc sur la figure 3.

Les signaux issus du ou des détecteurs de vibration 25 sont appliqués en parallèle à des filtres passebande 31, 32 centrés respectivement sur une fréquence fondamentale fo, par exemple de l'ordre de 5 Hz et sur une fréquence f1 harmonique de la fréquence fondamentale fo (avec f1 par exemple égale à 10 Hz). Les signaux issus des filtres passe-bande 31, 32, qui correspondent aux fréquences de vibration à prendre en compte, par exemple pour les amortir, sont appliquées par l'intermédiaire de circuits 33 d'intégration et de mise en forme, à un amplificateur 35, par exemple du type à quatre quadrants, dont la sortie sert à alimenter les bobines 18, 19. Une boucle supplémentaire d'asservissement comprend un circuit 34 de mise en forme auquel sont appliqués les signaux issus du détecteur 26 et dont la sortie est connectée à une deuxième entrée de l'amplificateur 35.

Sur la figure 3, on n'a pas représenté les circuits d'asservissement des paliers magnétiques radiaux 23, 24, qui sont classiques et sont indépendants des circuits d'asservissement du moteur linéaire destinés à produire des déplacements axiaux.

A titre d'exemple, les armatures 15, 17 portant les bobines 18, 19 peuvent présenter un diamètre D = 0,1 m et une longueur axiale b = 0,02 m en définissant avec les armatures 21, 22 de la structure flottante un entrefer e = 0,002 m. L'aimant permanent 13 peut être choisi de manière à créer au niveau des entrefers entre les armatures 15 et 21 d'une part et 17 et 22 d'autre part, un champ magnétique B = 1 Tesla.

Pour une fréquence de vibrations f = 5 Hz et une structure flottante 20 de masse m = 100 kg, une force F = 1000 newton peut être appliquée par le vibreur 100 avec une amplitude de déplacement axial de la structure flottante a = 0,01 m, selon la formule :

$$a = F / ((2 \pi f)^2 . m) = 0,01 \text{ m}$$

Grâce à la possibilité de déplacements axiaux substantiels $\underline{a}$ de la structure flottante 20, il est ainsi possible, pour des basses fréquences, et avec une masse de structure flottante pouvant rester comprise entre environ 50 et 100 Kg, d'exercer ou de compenser à l'aide du vibreur 100 des efforts importants de l'ordre de 1000 newton, ce qui n'était pas possible avec les pots vibrants de l'art antérieur présentant un montage en porte-à-faux, ni avec des paliers magnétiques axiaux dont l'entrefer est réduit.

Le courant de magnétisation I nécessaire pour les bobines 18, 19 est I = F/ (D .π. B)
soit I = 3183A avec les valeurs numériques indiquées plus haut pour la force F exercée par le vibreur, le diamètre D des armatures 15, 17 et la valeur B du champ magnétique exercé au niveau des bobines 18, 19.

Les pertes par effet Joule dans les bobines 18, 19 peuvent dans ce cas être estimées à

$$N = R. I^2$$

où R représente la résistance des bobines 18, 19.

Pour des bobines 18, 19 présentant une épaisseur $e_b$ = 0,001 m, un coefficient k = 1,25 prenant en compte le garnissage en cuivre, et une valeur de résistivité σ du cuivre égale à 1,7 10⁸ Ohm/m, la résistance des bobines 18, 19 peut être évaluée à :

$$R = k.\sigma D.\pi /(2.b)$$

soit R = 5,3.10⁻⁵ ohm avec les valeurs numériques indiquées plus haut pour k, σ, D et b.

Les pertes N peuvent dans ces conditions être évaluées à 538 watts.

Avec une force sinusoïdale présentant une amplitude de 1000 newton les pertes sont alors égales à 269 watts, ce qui constitue une valeur n'entraînant pas d'échauffement excessif. Toutefois, il est également possible de mettre en oeuvre un système de refroidissement des bobines 18, 19, par exemple à l'aide d'air comprimé.

Les vibreurs 100 selon l'invention peuvent être utilisés par paires et montés par leur partie fixe 10 de chaque côté d'un bâti à stabiliser ou exciter afin d'éviter la création de couples parasites.

Dans le cas où plusieurs capteurs de vibrations 25 tels que des accéléromètres ou des vélocimètres, sont disposés en différents points du bâti à stabiliser auquel sont fixées les structures 10 d'un ou plusieurs vibreurs 100 selon l'invention, il est possible de réaliser à l'aide d'une matrice d'influence une optimisation des boucles d'asservissement du courant circulant dans les bobines 18, 19 des vibreurs à partir des capteurs de vibrations 25 dans des bandes de fréquences étroites centrées sur la fréquence fondamentale fo des vibrations et les harmoniques f1.

Le mode de réalisation des figures 1 à 5, qui utilise un aimant permanent pour la création du champ magnétique dans lequel sont placées les bobines 18, 19 du moteur linéaire, peut présenter dans certains cas une tenue mécanique insuffisante compte tenu de la nécessité d'assembler des aimants permanents 13, dont la tenue mécanique est par nature restreinte, avec les parties ferromagnétiques 14, 15, 16, 17 de la structure centrale fixe 10.

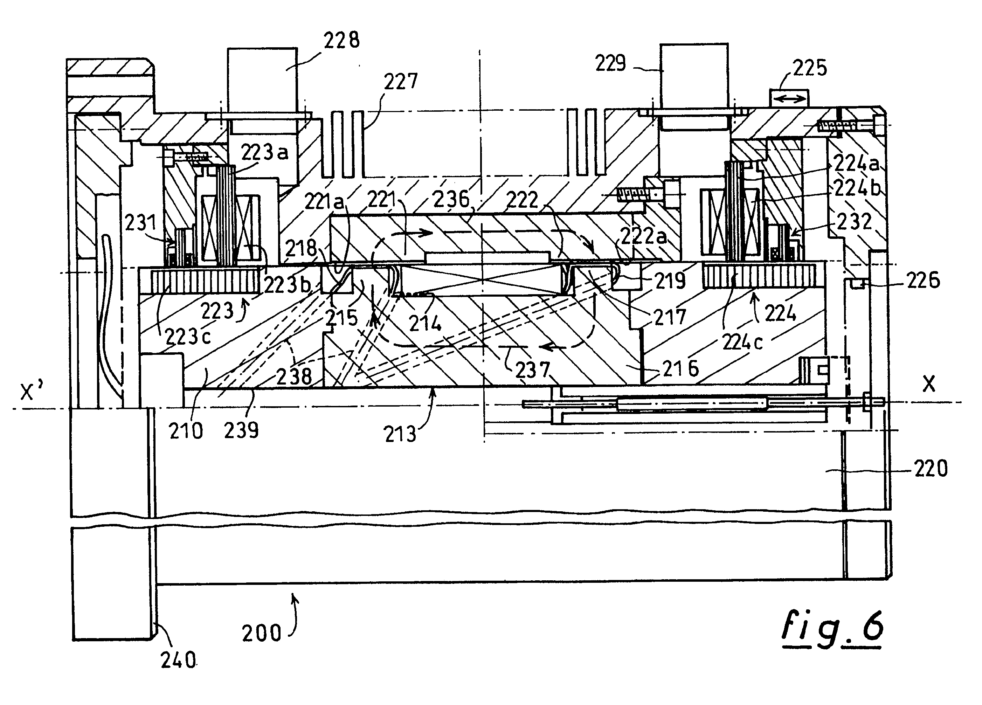

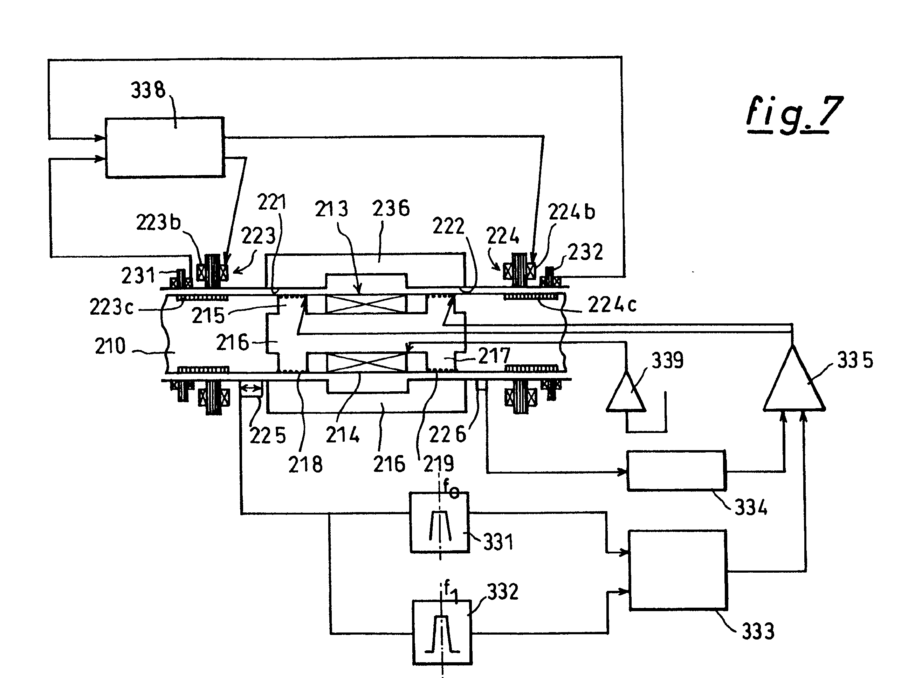

Le mode de réalisation des figures 6 et 7 permet de remédier à cet inconvénient dans la mesure où dans ce second mode de réalisation le champ magnétique du moteur linéaire du vibreur 200 est créé à l'aide d'un électroaimant 213 et non à l'aide d'un aimant permanent.

Le vibreur 200 des figures 6 et 7 présente une structure d'ensemble assez semblable à celle du vibreur 100 des figures 1 à 5 dans la mesure où il comporte deux structures 210, 220 coaxiales autour d'un axe X'X et maintenues sans contact l'une par rapport à l'autre à l'aide de deux paliers magnétiques actifs radiaux 223, 224, l'une des structures 220 du vibreur étant fixée sur un bâti à stabiliser ou mettre en vibration selon l'axe X'X et l'autre structure 210 du vibreur étant montée flottante par rapport à la structure 220, un moteur linéaire assurant des déplacements axiaux de la structure flottante 210 par rapport à la structure 220 fixée au bâti.

Contrairement au cas du mode de réalisation des figures 1 à 5, le vibreur 200 des figures 6 et 7 comporte une structure flottante 210 disposée à l'intérieur d'une structure fixe 220. De la sorte, il n'est pas nécessaire de prévoir un carter extérieur autour de l'ensemble du vibreur 200, puisque la structure externe 220 fait elle-même office de carter de protection.

Compte tenu du fait que la structure fixe 220 constitue la structure externe du vibreur 200, les paliers magnétiques radiaux 223, 224 comprennent des culasses feuilletées statoriques 223a, 224a et des bobines d'électroaimants 223b, 224b montées sur la structure 220 autour de la structure flottante centrale 210 et les armatures feuilletées rotoriques 223c, 224c sont elles-mêmes disposées à la périphérie de la structure centrale de révolution 210 montée flottante.

Des détecteurs radiaux 231, 232 de la position radiale de la structure interne 210 par rapport à la structure fixe externe 220 sont disposés à proximité des paliers radiaux 223, 224. Les références 228 et 229 désignent sur la figure 6 les connecteurs entre d'une part les détecteurs radiaux 231, 232 et les enroulements 223b, 224b des paliers radiaux 223, 224, et d'autre part les circuits d'asservissement 338 (Fig. 7) des paliers magnétiques radiaux 223, 224.

Dans sa partie centrale située entre les paliers radiaux 223 et 224, la structure externe fixe 220 comprend une partie de révolution ferromagnétique 236 qui présente à ses deux extrémités des armatures cylindriques 221, 222 qui jouent le même rôle que les armatures 21, 22 du vibreur 100 des figures 1 à 5 et présentent des parties périphériques internes cylindriques 221a, 222a situées en regard d'armatures cylindriques 215, 217 solidaires de la structure centrale 210 et munies de bobines 218, 219 disposées dans les entrefers annulaires cylindriques ménagés entre les armatures 215, 221 et 217, 222. Les armatures 215 et 217 jouent donc le même rôle que les armatures 15 et 17 du vibreur 100 des figures 1 à 5 et présentent une longueur dans la direction X'X qui est plus réduite que celle des armatures 221 et 222 qui leur font face. Les armatures 215 et 217 font partie d'un circuit ferromagnétique 216 qui constitue la culasse d'un électroaimant 213 comprenant une bobine 214. La circulation du flux magnétique créé par l'électroaimant 213 est matérialisée sur la figure 6 par des traits discontinus 237, et s'effectue dans les circuits ferromagnétiques 216 et 236 à travers les armatures 215, 221 et 217, 222 et les entrefers ménagés entre ces armatures.

Les bobines 218, 219 et 214 disposées dans la structure interne flottante 210 sont alimentées par des fils de connexion disposés dans des passages 238 débouchant dans un canal axial 239 formé dans la structure interne 210 et débouchant lui-même aux extrémités frontales du vibreur 200. Une circulation d'air comprimé de refroidissement peut être prévue à travers les passages 239 et 238 afin d'assurer une évacuation de la chaleur dissipée dans les bobines 218, 219 et 214. Les pertes par effet Joule dans la bobine excitatrice 214 ne constituent ainsi pas un inconvénient si l'évacuation des calories est assurée soit par la configuration des structures 210, 220 soit par des circulations d'air. Sur la figure 6, on peut noter la présence d'ailettes de refroidissement 227 formées dans la partie centrale de la structure externe 220 dans la zone située en face des diverses bobines 218, 214 et 219.

Comme dans le cas du vibreur 100, un ou plusieurs détecteurs de vibration 225 selon la direction X'X sont disposés sur la structure fixe 220 ou sur le bâti sur lequel est fixé le vibreur 220 par la bride de fixation 240 formée sur la structure externe 220. Un détecteur 226, analogue au détecteur 26 des figures 2 et 3 permet également de détecter les positions axiales relatives des structures 210 et 220 et de garantir que les armatures 215, 217 de la structure flottante interne 210 munies de leurs bobines 218, 219 sont bien positionnées en regard des armatures correspondantes 221, 222 de la structure externe fixe 220.

La figure 7 montre de façon schématique les circuits d'asservissement correspondant au mode de réalisation de la figure 6. Les circuits 331 à 335 qui coopèrent avec les éléments 225, 226, 218, 219 sont semblables respectivement aux circuits 31 à 35 des circuits d'asservissement décrits en référence à la figure 3 qui coopèrent avec les éléments correspondants 25, 26, 18, 19 et ne seront donc pas décrits de nouveau. En particulier, le circuit 334 peut être constitué par un circuit du type PID (Proportionnel-Integral-Derivé).

On a représenté en outre sur la figure 7 un amplificateur 339 d'alimentation de la bobine 214 de l'électroaimant d'excitation 213, et les circuits 338 d'asservissement du courant d'alimentation des enroulements d'électroaimant 223b, 224b à partir des signaux fournis par les détecteurs radiaux 231, 232.

On peut choisir à titre d'exemple, pour les entrefers entre les armatures 215, 221 et 217, 222, ainsi que pour les dimensions de ces armatures et pour la masse de la structure flottante interne 210, des valeurs numériques du même ordre de grandeur que celles indiquées en référence au mode de réalisation des figures 1 à 5.

Les armatures cylindriques 215, 217 sont avantageusement fendues selon un demi-plan axial comme les armatures cylindriques 15, 17 (voir figure 5).

Le vibreur selon l'invention peut s'appliquer également à des cas où l'axe X'X n'est plus horizontal, mais est incliné par rapport à l'horizontale ou est vertical. Dans ce cas, l'action de la pesanteur sur la structure flottante (structure 20 selon le mode de réalisation des figures 1 à 5, structure 210 selon le mode de réalisation des figures 6 et 7) est compensée à l'aide d'un ressort à faible raideur exerçant une action sur ladite structure flottante. D'une manière générale, le vibreur selon l'invention présente toutefois les meilleures performances lorsqu'il n'existe aucun contact entre la structure flottante 20, 210 et la structure 10, 220.

## Revendications

1. Vibreur basse fréquence agissant sur des vibrations de basse fréquence sur un bâti selon une direction prédéterminée X'X, caractérisé en ce qu'il comprend :

   a) une première structure (10; 210) comprenant des première et deuxième armatures cylindriques (15, 17; 215, 217) coaxiales audit axe X'X et munies à leur périphérie respectivement d'une première et d'une deuxième bobine (18, 19; 218, 219) et au moins un moyen de création d'un champ magnétique (13; 213) disposé entre lesdites première et deuxième armatures cylindriques (15, 17; 215, 217) pour faire circuler entre celles-ci un flux magnétique,

   b) une deuxième structure (20; 220) comprenant esentiellement une masse ferromagnétique cylindrique, coaxiale audit axe X'X et présentant des troisième et quatrième armatures cylindriques (21, 22; 221, 222) dont la périphérie (21a, 22a; 221a, 222a) est située en regard respectivement desdites première et deuxième bobines (18, 19; 218, 219) et permet la circulation dudit flux magnétique à travers ladite masse ferromagnétique,

   c) des premier et second paliers magnétiques actifs radiaux (23,24; 223, 224) disposés de part et d'autre de l'ensemble constitué par lesdites première et deuxième armatures (15, 17; 215, 217) et destinés à maintenir radialement la deuxième structure (20; 220) par rapport à la première structure (10; 210) sans contact avec cette dernière,

   d) au moins un détecteur (25; 225) de vibrations selon l'axe X'X, disposé sur l'une des première et deuxième structures (10, 20; 210, 220),

   e) un détecteur (26; 226) de la position axiale des bobines (18, 19; 218, 219) de la première structure (10; 210) par rapport auxdites troisième et quatrième armatures cylindriques correspondantes (21, 22; 221, 222) de la seconde structure (20; 220) et

   f) des circuits d'asservissement du courant circulant dans les bobines (18, 19; 218, 219) en fonction au moins des signaux délivrés par ledit détecteur de vibrations (25; 225) et des signaux délivrés par ledit détecteur de position (26; 226).

2. Vibreur selon la revendication 1, caractérisé en ce que la première structure (10) est solidaire d'un bâti tandis que la deuxième structure (20) est montée flottante par rapport à la première structure (10).

3. Vibreur selon la revendication 1, caractérisé en ce que la première structure (210) est montée flottante par rapport à la deuxième structure (220) elle-même solidaire d'un bâti.

4. Vibreur selon l'une quelconque des revendications 1 à 3, caractérisé en ce que la première structure (10; 210) est disposée coaxialement à l'intérieur de la deuxième structure (20; 220).

5. Vibreur selon l'une quelconque des revendications 1 à 4, caractérisé en ce que le détecteur (25; 225) de vibrations est monté sur une structure fixe (10; 220) solidaire du bâti.

6. Vibreur selon la revendication 5, caractérisé en ce qu'il comprend plusieurs détecteurs de vibration (25; 225) répartis sur une structure fixe (10; 220) solidaire du bâti.

7. Vibreur selon l'une quelconque des revendications 1 à 6, caractérisé en ce que le dit moyen de création d'un champ magnétique (13) comprend un aimant permanent relié aux première et deuxième armatures cylindriques (15, 17) par des circuits (14, 16) concentrateurs de flux magnétique.

8. Vibreur selon l'une quelconque des revendications 1 à 6, caractérisé en ce que ledit moyen de création d'un champ magnétique (213) est constitué au moins par un électro-aimant comprenant une bobine (214) et une culasse (216) reliée auxdites première et deuxième armatures cylindriques (215, 217).

9. Vibreur selon l'une quelconque des revendications 1 à 8, caractérisé en ce que lesdites première et deuxième armatures cylindriques (15, 17) sont fendues selon au moins un demi-plan axial (151).

10. Vibreur selon l'une quelconque des revendications 1 à 9, caractérisé en ce que les circuits d'asservissement du courant circulant dans les première et deuxième bobines (18, 19; 218, 219) comprennent un amplificateur de sortie (35; 335) du type à quatre quadrants.

11. Vibreur selon l'une quelconque des revendications 1 à 10, caractérisé en ce que les circuits d'asservissement du courant circulant dans les première et deuxième bobines (18, 19; 218, 219) comprennent au moins un filtre passe-bande (31, 32; 331, 332) auquel sont appliqués les signaux issus des détecteurs de vibration (25; 225), et une boucle supplémentaire (34; 334) d'asservissement du courant circulant dans les bobines (18, 19; 218, 219) en fonction des signaux issus dudit détecteur de position (26; 226).

12. Vibreur selon l'une quelconque des revendications 1 à 11, caractérisé en ce que lesdites première et deuxième armatures cylindriques (15, 17; 215, 217) présentent une longueur axiale comprise entre environ 10 et 30 mm tandis que les troisième et quatrième armatures cylindriques (21, 22; 221, 222) présentent une longueur axiale comprise entre environ 30 et 60 mm.

13. Vibreur selon l'une quelconque des revendications 1 à 12, caractérisé en ce que les entrefers définis par les première et troisième armatures cylindriques (15, 21; 215, 221) d'une part, et par les deuxième et quatrième armatures cylindriques (17, 22; 217, 222) d'autre part sont compris entre environ 1 et 3 mm.

14. Vibreur selon l'une quelconque des revendications 1 à 13, caractérisé en ce qu'il comprend des détecteurs radiaux associés aux premier et deuxième paliers magnétiques actifs radiaux (23, 24; 223, 224) qui sont disposés dans les mêmes plans radiaux que ces paliers actifs radiaux.

15. Vibreur selon l'une quelconque des revendications 1 à 14, caractérisé en ce que les circuits d'asservissement du courant circulant dans les première et deuxième bobines (18, 19; 218, 219) sont configurés de telle manière que le vibreur fonctionne en amortisseur de vibrations.

16. Vibreur selon l'une quelconque des revendications 1 à 14, caractérisé en ce que les circuits d'asservissement du courant circulant dans les première et deuxième bobines (18, 19; 218, 219) sont configurés de telle manière que le vibreur fonctionne en excitateur de vibrations.

17. Vibreur selon l'une quelconque des revendications 1 à 16, caractérisé en ce que celle des première et deuxième structures (10; 20; 210; 220) qui est montée flottante par rapport au bâti présente une masse comprise entre environ 50 et 100 kg.

18. Vibreur selon l'une quelconque des revendications 1 à 17, caractérisé en ce qu'il est adapté pour agir sur des vibrations dont la fréquence est comprise entre quelques herz et quelques dizaines de herz.

EP 0 457 666 A1

_fig.1_

10 mm

20

23c

23

21a

18

21

14

23a

23b

15

13

10

fig. 2

_fig.3_

_fig.4_

_fig.5_

EP 0 457 666 A1

_fig.6_

EP 0 457 666 A1

_fig.7_

EP 0 457 666 A1

Office européen
des brevets

**RAPPORT DE RECHERCHE EUROPEENNE**

Numero de la demande

EP 91 40 1235

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-1 450 818 (PECHINEY)<br>* Page 2, colonne 1, lignes 3-41;<br>revendications 1-3; figures 1,2 * | 1,3-9 | B 06 B 1/04<br>H 02 K 33/00 |
| A | | 12,13,<br>17,18 | |
| | --- | | |
| Y | DE-A-2 213 447 (K. BODEN et al.)<br>* Page 3, ligne 1 - page 4, ligne 6;<br>page 5, lignes 18-29; page 7, ligne 3 -<br>page 8, ligne 4; figures 1,2 * | 1,3-9 | |
| A | | 10,11,<br>14,15 | |
| | --- | | |
| Y | PATENT ABSTRACTS OF JAPAN, vol. 7, no.<br>165 (M-230)[1310], 20 juillet 1983; &<br>JP-A-58 071 003 (DAINI SEIKOSHA)<br>27-04-1983<br>* En entier *<br>--- | 1,3-9 | |
| A | IDEM | 14,16 | |
| | --- | | |
| A | EP-A-0 338 933 (SOCIETE DE MECANIQUE)<br>* Résumé * | 1-18 | DOMAINES TECHNIQUES RECHERCHES (Int. Cl.5)<br><br>B 06 B<br>H 02 K |
| | --- | | |
| A | EP-A-0 033 803 (NATIONAL AERONAUTICS) | | |
| | --- | | |
| A | FR-A-2 133 583 (IBM)<br>----- | | |

Le présent rapport a été établi pour toutes les revendications

| Lieu de la recherche | Date d'achèvement de la recherche | Examinateur |
|---|---|---|
| LA HAYE | 22-08-1991 | HAASBROEK J.N. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
............................................................
& : membre de la même famille, document correspondant

EPO FORM 1503 03.82 (P0402)